# EUROPEAN PATENT APPLICATION

(11) **EP 0 592 377 A1**
(43) Date of publication of application: **13.04.1994**
(21) Application number: 93830408.6
(22) Date of filing: 07.10.1993
(51) Int. Cl.: B62K 5/00, B62K 5/04, B62D 61/08, B62D 9/02

(54) **Four-wheeled motor vehicle with the action of a motor-cycle or other two-wheeled motor vehicle**

(30) Priority: 08.10.1992 IT FI920191
(71) Applicant: Calzolari, Rino, I-50145 Firenze (IT)
(72) Inventor: Calzolari, Rino, I-50145 Firenze (IT)
(74) Representative: Mannucci, Michele

(57) **Abstract**

The rear wheels are mounted on a tail unit (20) which can be orientated about an axis lying substantially in the vertical plane of longitudinal symmetry of the vehicle and which is horizontal or virtually horizontal, and means are provided which can orientate the chassis (1) of the vehicle with respect to the said tail unit in accordance with the angular movement of the steering handle-bars (74), to provide the inclined geometry of the vehicle around bends.

## Description

The invention relates to a motor vehicle having the general structure and the possibilities of geometry of a motorcycle or other two-wheeled motor vehicle, but which can be kept vertical when at rest or when in motion in a straight line.

A vehicle of this type is specified in other patents granted to the present holder. This vehicle comprises: (a) the chassis; (b) a pair of front steering wheels close to each other and mounted on a front steering unit similar to a fork with suspension and provided with handlebars; and (c) a tail unit with a pair of driving rear wheels which are close to each other. The disposition is such that stability is ensured at rest and in motion in a straight line, and that the inclined geometry is permitted around bends. In a turn, each of the two front wheels is mounted on the unit similar to a fork independently of the other wheel by means of its own pivot, which permits excursion of one wheel with respect to the other; however, one of the rear wheels mounted on the tail unit, namely the outer wheel around the bend, loses contact with the ground beyond a certain limit of inclination.

The object of the invention is to permit the inclination of the vehicle around a bend, to provide the typical action of two-wheeled vehicles, while keeping all the wheels in contact with the ground.

According to the invention, for the objects stated above, means are provided to orientate or in other words to incline the chassis (a) with respect to the said tail unit (c) in accordance with the angular movement of the steering handlebars, to facilitate the inclination of the chassis around bends while keeping the two rear wheels adhering to the ground.

The said means may comprise a mechanical transmission, of the chain or other type, between the axis of the front steering unit and the tail unit.

Alternatively, the said means may comprise a servomechanism, particularly of the hydraulic type, controlled by the front steering unit and at least one actuator which produces the orientations of the tail unit, with a power unit comprising a hydraulic pump or other equivalent means. In practice, a servo distributor subordinate to the front steering unit may control a pressure-operated hydraulic transmission which operates two servo control actuators in opposite directions to provide the inclination of the chassis in both directions with respect to the said tail unit and therefore with respect to the road surface. The power unit is driven by the engine of the vehicle.

The invention will be more clearly understood from the description and the attached drawing which shows a non-restrictive practical example of the invention. In the drawing,
Fig. 1 is a schematic diagram with a direct mechanical transmission between the front steering unit and the assembly carrying the rear wheels;
Fig. 2 shows a modified mechanical embodiment, with a transmission system with a drive of the hydraulic type, in a side view and in vertical longitudinal section;
Fig. 3 is a schematic plan view of the solution in Fig. 2; and
Fig. 4 shows the highlighted hydraulic system of an embodiment of the type shown in Figs. 2 and 3.

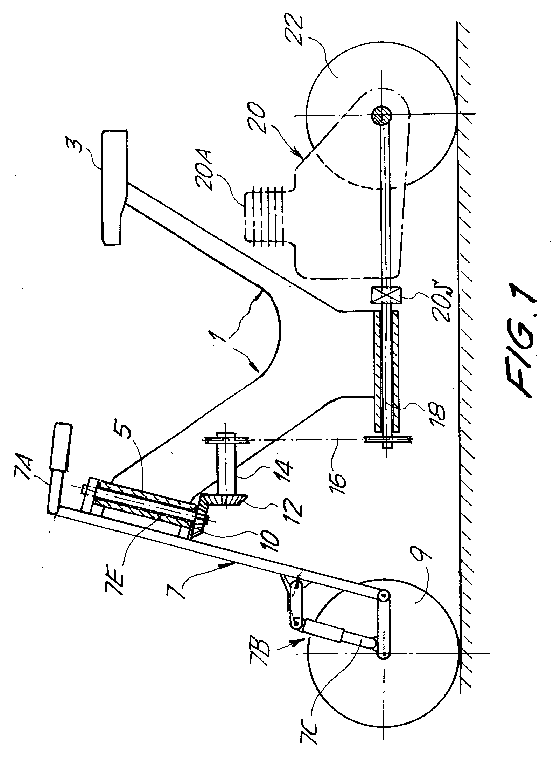

According to the simplified diagram shown in Fig. 1, the number 1 indicates the chassis of the two-wheeled vehicle which comprises the saddle 3 and a stem 5 slightly inclined downwards and forwards with respect to the vertical to engage the front unit 7 with the handlebars 7A and the double fork 7B with pivots in the form of articulated parallelograms 7C for the two front wheels 9; these are independently suspended, as specified in other preceding patents granted to the present holder, No. dated and No. dated (application No. 9412 A/90 dated 01/06/90 and application No. FI91A/46 dated 04/03/91). The unit 7 is engaged with the stem 5 by means of a shaft 7E which forms the axis of articulation of the unit 7 and which is held in the stem 5 by means of axial rolling bearings; the shaft 7E carries at its lower end a conical gear 10 which engages with a corresponding gear 12 carried by a shaft 14 integral with the chassis 1. According to the diagram shown, the shaft 14 has a horizontal development and transmits the directional movements of the front unit 7 of the handlebars 7A - by means of a chain or similar transmission system indicated by 16 - to a shaft 18 parallel to the shaft 14 and acting on a tail unit 20, which can be orientated about the axis of the shaft 18, so that the chassis 1 is inclined with respect to the ground. Oscillation about a suitable swivel joint 20A with a transverse axis may be provided, if the said unit 20 is to be suspended with respect to the chassis 1 of the vehicle. In any case, the tail unit 20, through the shaft 7E, the pair of gears 10 and 12, the shaft 14, the transmission 16 and the shaft 18, is given an angular movement which corresponds to that of the front steering unit 7 of the handlebars 7A, for the objects and functions stated below. The unit 20 has a pair of driving wheels 22 which are relatively close together and are driven by an engine assembly 20A forming part of the propulsion unit 20. The two wheels 22 may be sufficiently close together to avoid the necessity for a differential gear between them and in any case are sufficiently far apart to enable the vehicle, with these two wheels 22 and with the two front wheels 9 which are also spaced apart to a limited extent, to be kept, when at rest, in a vertical position on the supporting polygon defined by the four wheels when the steering is disposed symmetrically with respect to the vertical longitudinal plane of symmetry of the vehicle. However, when in motion the vehicle acts in exactly the same way as a two-wheeled vehicle and permits the inclination of the chassis 1 and consequently of the saddle 3 and of the occupant together with that of the front unit 7 when the vehicle is going around a bend, while keeping the four wheels in contact with the ground; the chassis 1 is orientated angularly, with respect to the tail unit 20, about the horizontal axis defined by the shaft 18, correspondingly and in a direction such that while the tail unit 20 is kept on the road surface the chassis 1 and therefore the vehicle are inclined inwards with respect to the bend which is produced by the movement of the handlebars 7A.

The disposition may also comprise the suspension of the tail unit 20 by means of the said suitable swivel joint system 20S provided in an intermediate position on the shaft 18 and with an oscillation system combined with this swivel joint.

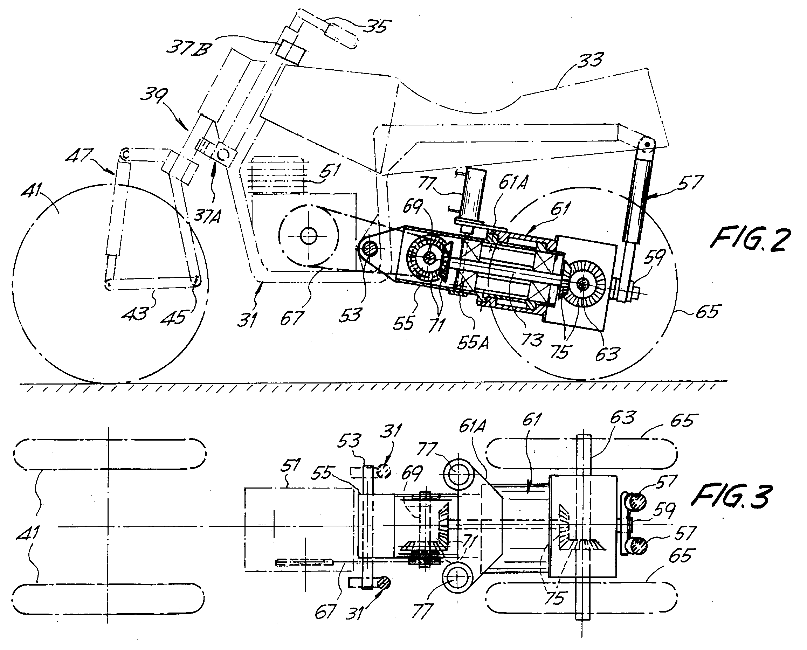

According to the embodiment shown in Figs. 2 to 4, 31 schematically indicates the chassis of the vehicle with which are associated the saddle 33 and the handle-bars 35 to operate a mechanism 37A - of the servo steering or other type - capable of moving the articulated front fork 39 about an axis lying in the plane of symmetry of the vehicle and slightly inclined downwards and forwards with respect to the vertical. Additionally, a hydrodynamic servo control system 37B is located between the handlebars 35 and the chassis 31 for the objects stated below. The front unit 39 has two wheels 41 side by side and, within certain limits, close together, and oscillating independently on arms 43 pivoted at 45 on the front unit 39 and combined with suspension and shock absorber systems indicated in a general way by 47. When the vehicle is inclined around bends, the axes of the two wheels 41 move out of alignment while remaining parallel to each other; the two wheels both keep their adhesion to the ground. The two wheels 41 are sufficiently close to enable the vehicle, in the vertical position and at rest, to be kept vertical on the supporting polygon to whose formation the two front wheels 41 contribute.

51 indicates the engine assembly which in this solution is mounted directly on the chassis 31. This chassis 31 has pivoted to it, about a transverse axis 53, an oscillating structure 55 which is suspended by means of a suspension and shock absorber system indicated in a general way by 57, and which comprises a single telescopic system or a pair of telescopic systems 57; this suspension and shock absorber system is pivoted at 59 coaxially with the axis of the substantially cylindrical development of the assembly 55, and at the rear end of the latter. About the said assembly 55 there is mounted a tail unit 61, which can be orientated about a longitudinal axis at a slight angle to the horizontal, which is formed by the assembly 55 and by the pivot 59. This tail unit 61 carries the axis 63 of two rear wheels 65 placed side by side and spaced apart within certain limits; these wheels 65 are the driving wheels and may be rigidly coupled together or connected through a differential gear, which, moreover, is practically unnecessary when the two wheels 65 are sufficiently close together; these two wheels additionally contribute to the formation of a supporting polygon for the vehicle when it is at rest.

From the engine 51, a transmission 67, of the chain type for example, drives a transverse shaft 69 which, through a bevel gear pair 71, a shaft 73 coaxial with the axis of the assembly 55 and consequently with the axis of angular movement of the tail unit 61 and through a second bevel gear pair 75, operates the shaft 63. The tail unit 61 has a double wing 61A which projects on both opposite sides of the assembly 55 and is engaged by two hydraulic actuators 77 associated with the control system servo distributor 37 between the handlebars 35 and the front unit 39 of the steering wheels 41; these actuators 77 act between the wings 61A and extensions 55A of the assembly 55. The disposition of the hydraulic system, which comprises the servo steering 37A, a pump 79 driven by the engine 51 and the two actuators 77, is such that these two actuators are moved, by the power obtained from the hydraulic system, in opposite directions with each displacement of the handlebars 35 from the straight travel geometry, in conditions such that the two actuators 77, operating between the tail unit 61 and the assembly 55, provide, for each turning geometry of the vehicle (produced by the handlebars 35), a corresponding inclination of the chassis 31 with the saddle 33 and the handlebars 35 towards the inside of the bend, by reaction between the tail unit 61 (which continues to have the wheels 65 resting on the ground) and the assembly 55 which, except for the oscillations about the axis 53 of the suspension, essentially forms an integral part of the chassis 31 of the vehicle.

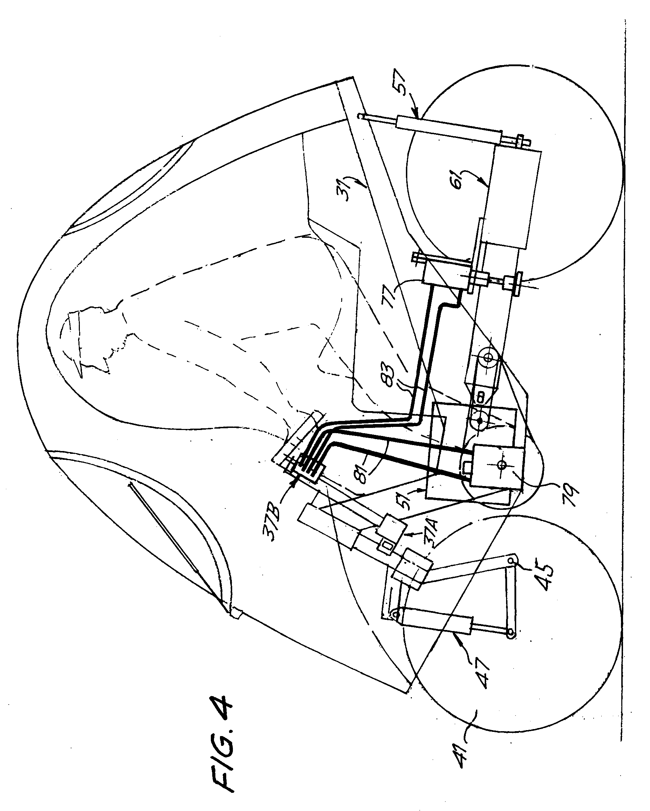

In Fig. 4, 81 is a schematic representation of the connecting ducts between the assembly 79 comprising the pump and a corresponding reservoir, and the hydraulic servomechanism 37B, and 83 is a schematic representation of the ducts between the servomechanism 37B and the actuators 77, which are in the form of cylinders and pistons.

The hydraulic system, similar to a servo steering system, as specified in the solution shown in Figs. 2 to 4, facilitates variations in geometry.

In conclusion, the system described above makes it possible to incline the vehicle in a way entirely analogous to that for a conventional two-wheeled vehicle, although the vehicle itself has four wheels; the two front wheels 41 oscillate independently and can therefore be displaced and moved out of alignment with respect to each other, while the two rear wheels are kept vertical and, by reaction, the chassis is inclined on each occasion towards the inside of the bend produced in the path of travel by the movement of the handlebars 35. The vehicle is therefore a four-wheeled vehicle which can be kept stably supported when at rest, but operates in a way which is substantially wholly equivalent to that of conventional two-wheeled vehicles.

It is to be understood that the drawing shows only an example provided solely as a practical demonstration of the invention, and that this invention may be varied in its forms and dispositions without thereby departing from the scope of the guiding concept of the invention. For example, the servo steering mechanism 37A could be omitted and the steering wheels controlled directly by the handlebars 35. The operation of the servo control system 37B remains unchanged, since it can work independently of servo steering 37A.

## Claims

1. Motor vehicle having the general structure of a motorcycle or other two-wheeled motor vehicle, comprising a pair of front steering wheels mounted on a front steering unit similar to a fork with suspension and provided with handlebars, and a pair of driving rear wheels which are close to each other, the disposition being such that stability is ensured at rest and in motion in a straight line, and that the inclined geometry is permitted around bends, each of the two front wheels being mounted on the unit similar to a fork independently of the other wheel by means of its own pivot, which permits excursion of one wheel with respect to the other, and the rear wheels being mounted on a tail unit which can be orientated about an axis lying substantially in the vertical plane of longitudinal symmetry of the vehicle and which is horizontal or virtually horizontal, characterized in that it comprises means capable of inclining the chassis with respect to the said tail unit in accordance with the angular movement of the steering handlebars, to provide the inclination of the vehicle around bends while keeping both the rear wheels in contact with the ground.

2. Motor vehicle according to Claim 1, characterized in that the said means comprise a mechanical transmission, of the chain or other type, between the axis of the front steering unit and the tail unit.

3. Motor vehicle according to Claim 1, characterized in that it comprises a servomechanism, particularly of the hydraulic type, controlled by the front steering unit and at least one actuator which produces the orientations of the tail unit.

4. Motor vehicle according to Claim 3, characterized in that a servo distributor subordinate to the front steering unit controls a pressure-operated hydraulic transmission which operates two servo controls to provide the inclination of the said tail unit in both directions, with the aid of a pressure fluid generated by the pump of a hydraulic power unit driven by the vehicle's installed motive power unit.

5. Four-wheeled motor vehicle with the action of a motorcycle or other two-wheeled vehicle; the whole as described above and as represented by way of example in the attached drawing.
